# EUROPEAN PATENT APPLICATION

(11) **EP 2 400 227 A1**
(43) Date of publication of application: **28.12.2011**
(21) Application number: 09840228.2
(22) Date of filing: 23.02.2009
(51) Int. Cl.: F24D 19/10, F16K 31/04, G05D 23/19

(54) **TEMPERATURE CONTROL APPARATUS FOR RADIATOR VALVE**

(71) Applicant: Sui, Haiyan, Shenzhen, Guangdong 518038 (CN); Huo, Weimin, Shenzhen, Guangdong 518038 (CN)
(72) Inventor: Sui, Haiyan, Shenzhen, Guangdong 518038 (CN); Huo, Weimin, Shenzhen, Guangdong 518038 (CN)
(74) Representative: Vandeberg, Marie-Paule L.G.
(86) International application number: PCT/CN2009/070499
(87) International publication number: WO 2010/094177

(57) **Abstract**

A heating valve temperature control device is provided, which includes a temperature control unit (10), a motor drive unit (20), and a heating valve drive unit (30), and further includes a manually controlled fixing nut (70), and the fixing nut (70) is connected to the heating valve drive unit (30) and a heating valve; the heating valve drive unit (30) includes a direct circuit (DC) motor (31) capable of controlling the rotational speed or the number of rotations, a gearbox (34), and a second casing (35), in which the DC motor (31) capable of controlling the rotational speed or the number of rotations includes a DC motor (311), a permanent magnet (PM) (312), and a Hall sensor (313); the heating valve drive unit (30) is connected to the motor drive unit (20) and the heating valve (40), the motor drive unit (20) is connected to the temperature control unit (10) in a wired or wireless manner, and is connected to the DC motor (31); and the temperature control unit (10), the motor drive unit (20) and the heating valve drive unit (30) may be separately or integrally disposed. The components are capable of being flexibly configured, so that a temperature detection apparatus is not affected by a heating radiator, thereby precisely controlling the indoor temperature.

## Description

### BACKGROUND OF THE INVENTION

### Field of the Invention

The present invention relates to a heating installation for warming, and more particularly to a digital temperature control device of a heating valve for using hot water/steam to supply heat.

### Related Art

In a cold area, a heat supply device is usually used in winter to deliver hot water/steam to an indoor heating radiator through a pipe for heat supply. In order to adjust and control the indoor temperature, a temperature control device is usually installed on a pipe valve of the heating radiator, and the digital temperature control device is generally powered by batteries. The heating valve temperature control devices powered by the batteries in the prior art mostly apply an integrated control manner, which integrates temperature control, motor drive, and heating valve drive, and defects thereof are as follows. A temperature sensor of the heating valve temperature control device for temperature measurement is installed inside a valve temperature controller switch, which is installed on the heating valve, and is too close to the heating radiator, so that the air temperature detected by the temperature sensor is quite different from the actual indoor temperature, thereby causing incorrect indoor temperature control. The heating valve temperature control device uses a common direct current (DC) motor, thereby failing to directly control a rotational speed and the number of rotations of the motor, and the rotational speed and the number of rotations are indirectly controlled by detecting the number of rotations of a gear in a gearbox thereof, which affects the control precision. In addition, the temperature control device can only receive two batteries due to a limited volume thereof, and the DC motor for driving the heating valve has high power consumption, so that the batteries need to be frequently replaced due to short service life thereof, thereby resulting in inconvenience of use.

### SUMMARY OF THE INVENTION

In order to solve the problems, the present invention provides a heating valve temperature control device for controlling a heating valve and including a temperature control unit, a motor drive unit, and a heating valve drive unit capable of being flexibly configured, so that a temperature detection apparatus is not affected by the increase of the temperature of a heating radiator, thereby precisely controlling the indoor temperature.

In order to achieve the objectives, the present invention provides a heating valve temperature control device, which includes a temperature control unit, a motor drive unit, and a heating valve drive unit. In addition, the device further includes a manually controlled fixing nut, and the fixing nut connects the heating valve drive unit to the heating valve. The heating valve drive unit includes a DC motor capable of controlling the rotational speed or the number of rotations, a gearbox, and a second casing, in which the DC motor capable of controlling the rotational speed or the number of rotations includes a DC motor, a permanent magnet (PM), and a Hall sensor. The PM is installed on an output shaft of the DC motor, and the Hall sensor is installed outside the PM. The heating valve drive unit is connected to the motor drive unit and the heating valve, the motor drive unit is connected to the temperature control unit in a wired or wireless manner, and is connected to the DC motor. The temperature control unit, the motor drive unit and the heating valve drive unit may be separately or integrally disposed.

The temperature control unit includes a setting knob or button for setting the indoor temperature, a liquid crystal display (LCD), a control chip, a temperature sensor for detecting the indoor temperature, batteries and a first casing, in which, the setting knob or button, the LCD, the temperature sensor and the batteries are all connected to the control chip, and the setting knob or button and the LCD are disposed on the first casing.

The motor drive unit includes a cut-off circuit composed by triodes Q5, Q9 and Q10 and resistors R19-R23, and a conduction circuit composed by triodes Q6-Q8 and resistors R25-R28, in which, an input end of the cut-off circuit is connected to the temperature control unit through the triode Q9 and the resistor R19, and an output end thereof is connected to the DC motor 31 through the triode Q10, the resistor R16 and a capacitor C12; and an input end of the conduction circuit is connected to the temperature control unit through the triode Q7, and an output end thereof is connected to the DC motor through the triode Q8, the resistor R16 and the capacitor C12.

The gearbox consists of multiple sets of gears engaged with each other, in which, an input end gear is connected to an output shaft of the DC motor, an output end gear is capable of axially moving, an output side of the output end gear is disposed with a screw rod, the screw rod is engaged with an inner nut disposed on an end cover of the gear set, and the screw rod is connected to a switch lever of the heating valve. The DC motor, the PM, the Hall sensor and the gearbox are disposed inside the second casing.

The motor drive unit is disposed inside the first casing of the temperature control unit to form an integrated structure, the cut-off circuit and the conduction circuit thereof are respectively connected to the temperature control unit and the DC motor, and the temperature control unit, the motor drive unit and the heating valve drive unit are integrally connected by plugging or connected in a split manner through leads.

The motor drive unit wirelessly connected to the temperature control unit is disposed inside a third casing having the same shape as the first casing of the temperature control unit, a wireless transmitting circuit is disposed inside the temperature control unit and is connected to the control chip, and a wireless receiving circuit is disposed inside the motor drive unit and is connected to the cut-off circuit and the conduction circuit of the motor drive unit.

One end of the first casing of the temperature control unit or the third casing of the wirelessly connected motor drive unit is disposed with a first L-shaped step surface, and a positioning notch is disposed on a center of the first L-shaped step surface. A second L-shaped step surface butted with the L-shaped step surface of the temperature control unit is disposed on a side of the second casing of the heating valve drive unit, a positioning block is disposed on the center of the second L-shaped step surface, and a positioning protrusion corresponding to the positioning notch on the temperature control unit is disposed on the positioning block. The first casing of the temperature control unit and the second casing of the heating valve drive unit are integrally engaged and plugged through the first L-shaped step surface and the second L-shaped step surface.

The temperature control unit and the motor drive unit are connected to a first junction box, the first junction box is the same as the second casing of the heating valve drive unit in shape, the heating valve drive unit is connected to a second junction box, the second junction box is the same as the first casing of the temperature control unit in shape, and the first junction box is connected to the second junction box through a lead.

The device is selectively disposed with one or more additional battery boxes or a power adapter connection box of an external power supply, the additional battery box or the connection box of a power adapter connected to the external power supply may be connected to the integrated temperature control unit, motor drive unit and heating valve drive unit respectively, or is connected to the temperature control unit disposed with the wireless transmitting circuit, the motor drive unit disposed with a wireless receiving circuit, and the heating valve drive unit respectively.

The manually controlled fixing nut includes two half nuts, two turning shafts, one manual hook, and one rod, in which, one end of one half nut is connected one end of the other half nut through the turning shaft, the two half nuts are capable of rotating about the turning shaft, the other end of the half nut is installed with the turning shaft and the manual hook, the manual hook is capable of rotating about the turning shaft, the other end of the half nut is installed with the rod, and the manual hook hooks the rod. The fixing nut fixedly connects the heating valve drive unit to the heating valve, and after the manual hook is pulled out of the rod, the fixing nut opens, and the heating valve drive unit fixed by the fixing nut is separated from the heating valve, so that the heating valve can be opened to supply heat.

The present invention contributes in effectively overcoming the defects of the conventional integrated heating valve temperature control switch, and providing a heating valve temperature control device capable of being flexibly configured. The temperature control part, the motor drive part and the heating valve drive part of the heating valve temperature control device according to the present invention may be integrally or separately disposed, and the parts may be interconnected in a wired or wireless manner, the device may be flexibly configured according to the actual requirements, so that the temperature detection apparatus is not affected by the heating radiator through such flexible configuration, thereby precisely controlling the indoor temperature. The PM is disposed on the output shaft of the DC motor and the Hall sensor is disposed outside the PM, so as to improve the common DC motor into a motor capable of controlling the rotational speed and the number of rotations, thereby more precisely controlling the opening degree of the heating valve. The additional battery box or the power adapter connection box of the external power supply is selectively installed, so that the service time of the battery is prolonged, and the times of battery replacement is reduced. The manually controlled fixing nut is used, so that a user may conveniently remove the temperature control device to restore the heat supply in an emergency of battery exhaustion and no batteries being available for replacement.

### BRIEF DESCRIPTION OF THE DRAWINGS

FIG. 1 is a schematic view of a common heating valve;
FIG. 2 is a schematic structure view of an integrally disposed temperature control unit and motor drive unit according to the present invention, in which FIG. 2A is a schematic outside view, FIG. 2B is a circuit diagram of the motor drive unit, and FIG. 2C is a structure block diagram of the temperature control unit;
FIG. 3 is a schematic structure view of a heating valve drive unit according to the present invention, in which, FIG. 3A is a schematic outside view, FIG. 3B is an overall schematic structure view, and FIG. 3C is a partial sectional view of FIG. 3B;
FIG. 4 is a schematic view of an integrated heating valve temperature control device according to the present invention;
FIG. 5 is a schematic view of a split type heating valve temperature control device according to the present invention, in which, FIG. 5A is a schematic view of a motor drive unit disposed with a wireless receiving circuit, FIG. 5B is a schematic view of a heating valve drive unit, FIG. 5C is a schematic view of a temperature control unit disposed with a wireless transmitting circuit, and FIG. 5D is a schematic view of the heating valve drive unit plugged with the motor drive unit with the wireless receiving circuit;
FIG. 6 is a schematic view of the temperature control unit, the motor drive unit and the heating valve drive unit connected in a wired manner according to the present invention, in which, FIG. 6A is a schematic exploded three-dimensional view of components, and FIG. 6B is a schematic three-dimensional view of a connection state;

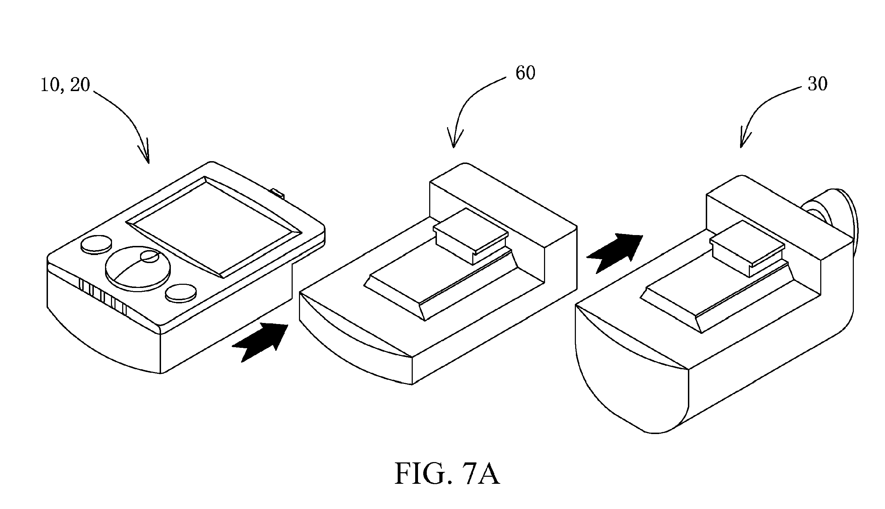

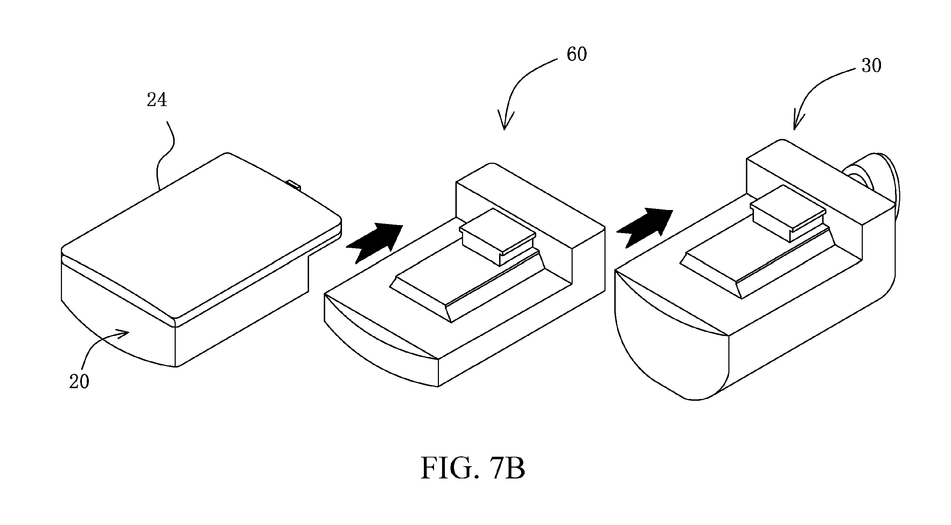

FIG. 7 is a schematic view of the temperature control unit, the motor drive unit and the heating valve drive unit connected to an additional battery box or a power adapter connection box of an external power supply according to the present invention, in which, FIG. 7A is a schematic view of the additional battery box or the power adapter connection box of the external power supply respectively connected to the integrated temperature control unit, motor drive unit and heating valve drive unit, and FIG. 7B is a schematic view of the additional battery box or the power adapter connection box of the external power supply respectively connected to the motor drive unit disposed with the wireless receiving device and the heating valve drive unit;
FIG. 8 is a schematic connection view of the heating valve temperature control device and a heating valve according to the present invention, in which, FIG. 8A is a schematic view before the connection, and FIG. 8B is a schematic view after the connection; and
FIG. 9 is a schematic structure view of a manually controlled fixing nut according to the present invention, in which FIG. 9A is a schematic view of the closed fixing nut, and FIG. 9B is a schematic view of the opened fixing nut.

### DETAILED DESCRIPTION OF THE INVENTION

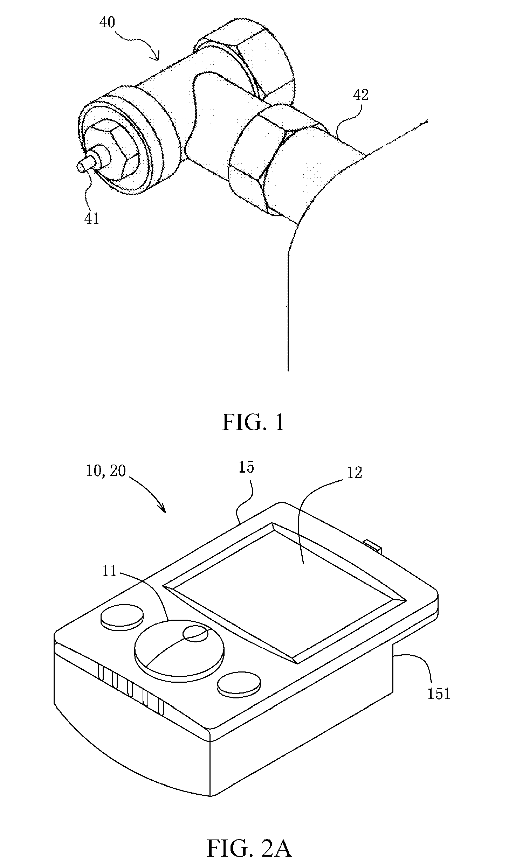

A heating valve temperature control device of the present invention is applied in a heating valve 40 shown in FIG. 1, and the valve is installed on a water pipe 42 of a hot-water heating radiator. When a valve switch lever 41 moves inwards, a water flow in the water pipe gradually decreases till the valve is closed, and when the switch lever 41 moves outwards, the water flow gradually increases till the valve is fully opened, thereby adjusting indoor temperature through the adjustment of the water flow in the water pipe.

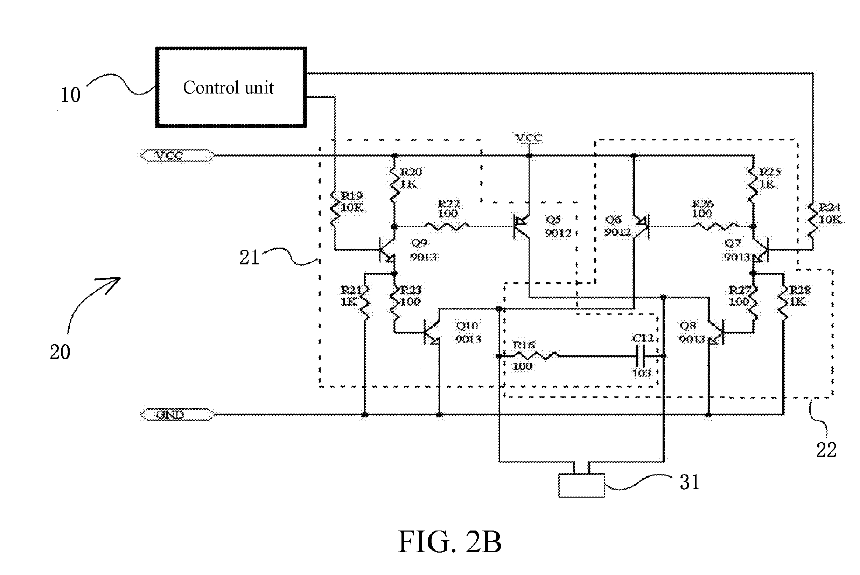

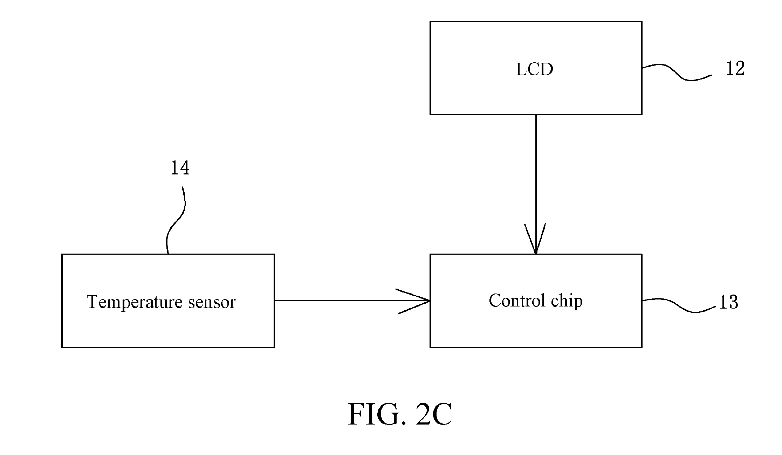

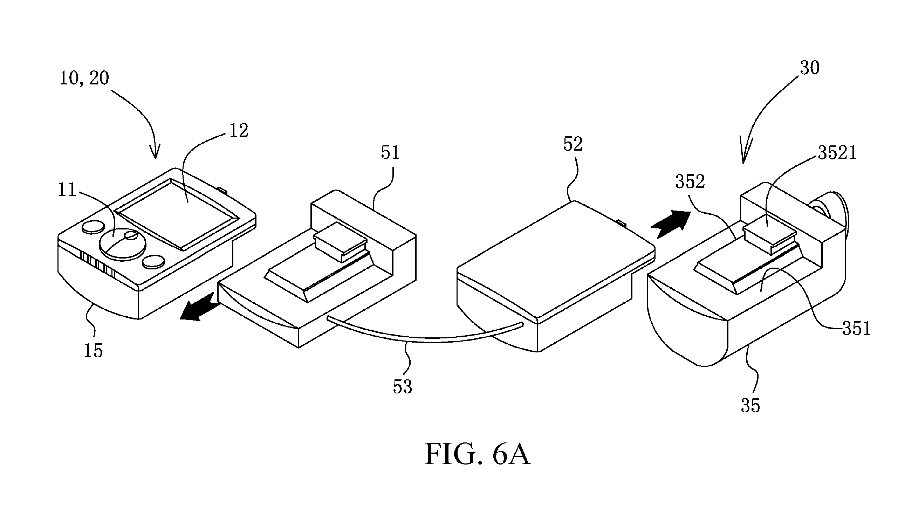

Referring to FIG. 2 to FIG. 4, a heating valve temperature control device of the present invention includes a temperature control unit 10, a motor drive unit 20, and a heating valve drive unit 30. As shown in FIG. 2A and FIG. 2C, the temperature control unit 10 is for controlling and adjusting the indoor temperature, and includes a setting knob or button 11, an LCD 12, a control chip 13, a temperature sensor 14 for detecting the indoor temperature, batteries, and a first casing 15, in which the setting knob or button 11 is for setting the indoor temperature to a suitable temperature, the set temperature is displayed on the LCD 12, and the temperature sensor 14 is for detecting the indoor temperature and sending the detected indoor temperature data to the control chip 13. The setting knob or button 11 and the LCD 12 are disposed on a panel of the first casing 15 and are connected to the control chip 13 in the first casing, and the temperature sensor 14 and the batteries (not shown) are installed inside the first casing and are connected to the control chip 13. The setting knob or button 11, the LCD 12, the temperature sensor 14 and the control chip 13 may all applies common apparatuses. The control chip 13 compares the indoor temperature data detected by the temperature sensor 14 with the temperature set by a user, starts the motor drive unit 20 and the heating valve drive unit 30 to operate if the indoor temperature is different from the temperature set by the user, and adjusts an opening degree of the heating valve 40. The adjustment of the heating valve results in water flow change in the hot water pipe, so that the indoor temperature changes. The first casing 15 has a plugging structure as shown in FIG. 2 and FIG. 6A. A first L-shaped step surface 151 is disposed on an lower side of one end of the first casing 15 of the temperature control unit 10, a positioning notch (not shown) is disposed on a center of a vertical surface of the first L-shaped step surface and corresponds to a positioning protrusion 3521 on a second casing 35 of the heating valve control unit in position, and the temperature control unit 10 is powered by a dry cell in the first casing 15.

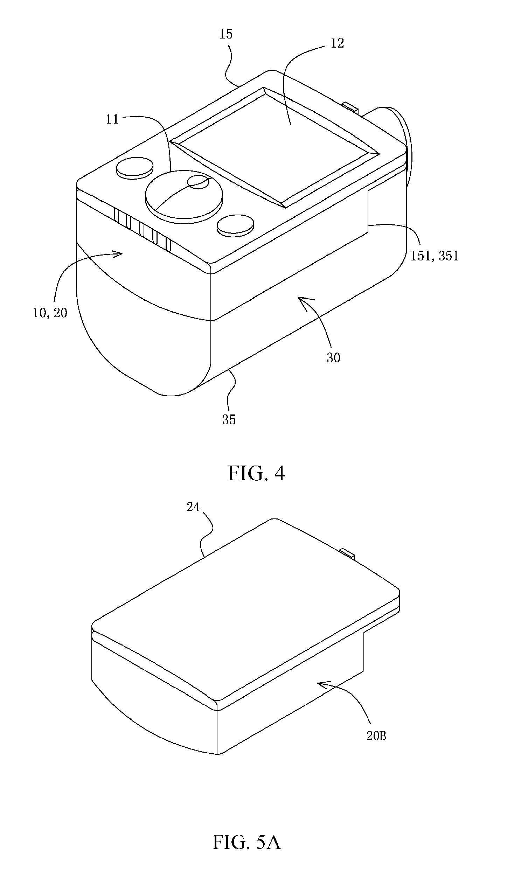

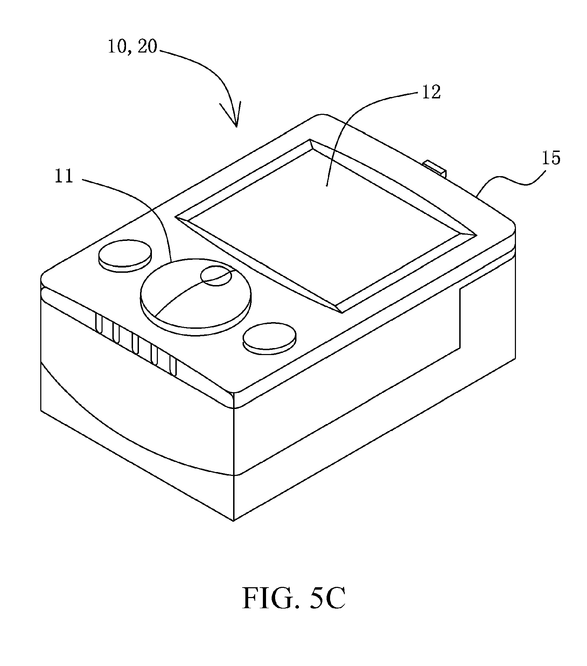

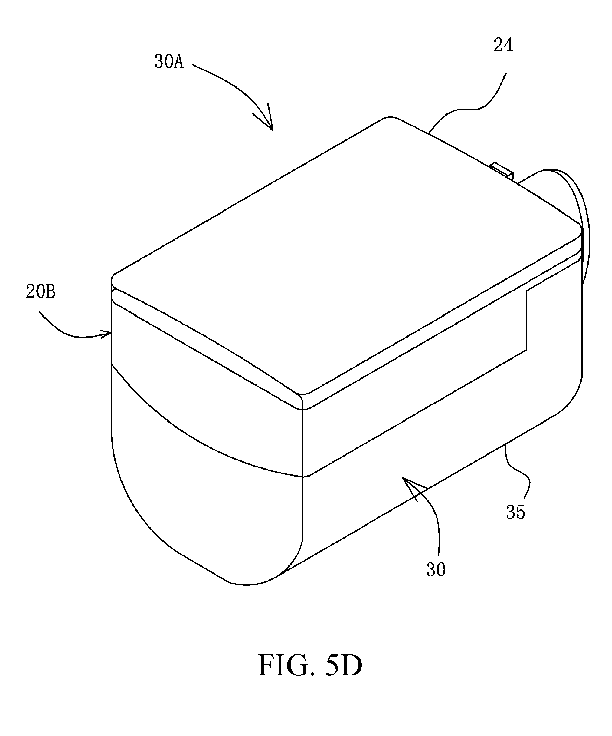

As shown in FIG. 2B, the motor drive unit 20 includes a cut-off circuit 21 including triodes Q5, Q9 and Q10 and resistors R19-R23, and a conduction circuit 22 including the triodes Q6-Q8 and the resistors R25-R28, in which, an input end of the cut-off circuit 21 is connected to the temperature control unit 10 through the triode Q9 and the resistor R19, and an output end of the cut-off circuit 21 is connected to a DC motor 31 through the triode Q10, the resistor R16 and a capacitor C12. An input end of the conduction circuit 22 is connected to the temperature control unit 10 through the triode Q7, and an output end of the conduction circuit 22 is connected to the DC motor 31 through the triode Q8, the resistor R16 and the capacitor C12. The motor drive unit 20 is for receiving a control signal of the temperature control unit 10, and driving the DC motor to rotate clockwise or counterclockwise by alternating electrical polarity for supplying a DC current to the DC motor. The rotational speed and the number of rotations of the motor are controlled by controlling a time and an interval of power supplied to the DC motor, so as to control the opening degree of the heating valve. During the operation of the motor drive unit 20, when the motor 311 rotates clockwise, the triodes Q5 and Q10 are cut off, while the triodes Q6 and Q8 are conducted, and when the motor 311 rotates counterclockwise, the triodes Q6 and Q8 are cut off, while the triodes Q5 and Q10 are conducted, so that the electrical polarity at two ends of the motor is changed. The rotational speed and the number of rotations of the motor in a clockwise or counterclockwise direction are determined by the control signal of the temperature control unit, and the rotational speed and the number of rotations of the motor are detected by a Hall sensor 313 of the heating valve drive unit 30. The motor drive unit 20 may be selectively connected to the temperature control unit 10 through a wired or wireless manner, and as shown in FIG. 6A, the motor drive unit 20 is disposed inside the first casing 15 of the temperature control unit 10, and the cut-off circuit 21 and the conduction circuit 22 thereof are respectively connected to the temperature control unit 10 and the DC motor 311. The integrated temperature control unit may be independently disposed in a place far away from the radiator, and is hung on a wall for example. The temperature control unit 10, the motor drive unit 20 and the heating valve drive unit 30 are connected to each other through the wired manner. Specifically, the temperature control unit 10 and the motor drive unit 20 are plugged to a first junction box 51, and an L-shaped step surface of the first junction box is the same as an L-shaped step surface of the second casing 35 of the heating valve drive unit 30, so that the first junction box 51 may be plugged to the first casing 15 of the temperature control unit 10. The heating valve drive unit 30 is plugged to a second junction box 52, and an L-shaped step surface of the second junction box is the same as an L-shaped step surface of the first casing 15 of the temperature control unit 10, so that the second junction box may be plugged to the heating valve drive unit 30. The first junction box 51 is connected to the second junction box 52 through a lead 53. By such connection the heating valve drive unit 30 is connected to the heating valve, while the temperature control unit 10, the motor drive unit and the heating valve drive unit 30 may be separately disposed in places far away from the heating valve drive unit 30, so as to correctly detect the indoor temperature. FIZZ 5A illustrates a wireless connection structure of the motor drive unit and the temperature control unit 10, and in FIG. 5A, a motor drive unit 20B wirelessly connected to the temperature control unit 10 is disposed inside a third casing 24 of the same shape as that of the first casing 15 of the temperature control unit, in which, the third casing 24 may be plugged to the second casing 35 of the heating valve drive unit to form an assembly 30A of the motor drive unit and the heating valve drive unit as shown in FIG. 5D, and the assembly and the temperature control unit disposed with a wireless transmitting circuit in FIG. 5C form a split type structure of the heating valve temperature control device. A wireless transmitting circuit (not shown) is disposed inside the first casing 15 of the temperature control unit 10, and is connected to the control chip 13 to form a handheld device similar to an air-conditioner remote control, which may be placed in any indoor position. The temperature control unit transmits the control signal through the wireless transmitting circuit. A wireless receiving circuit (not shown) is disposed inside the motor drive unit 20B, is connected to the cut-off circuit 21 and the conduction circuit 22 of the motor drive unit, and is for receiving the control signal and transferring the signal to the motor drive unit. The wireless transmitting circuit is a common high-frequency wireless transmitting circuit, and the wireless receiving circuit is a common high-frequency wireless receiving circuit.

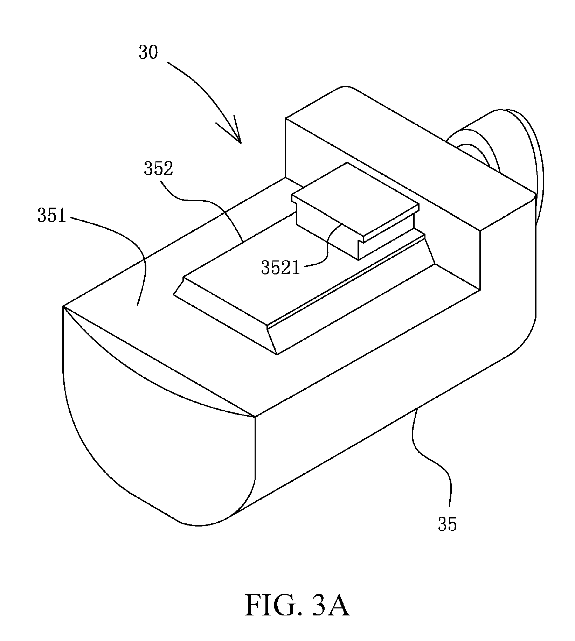

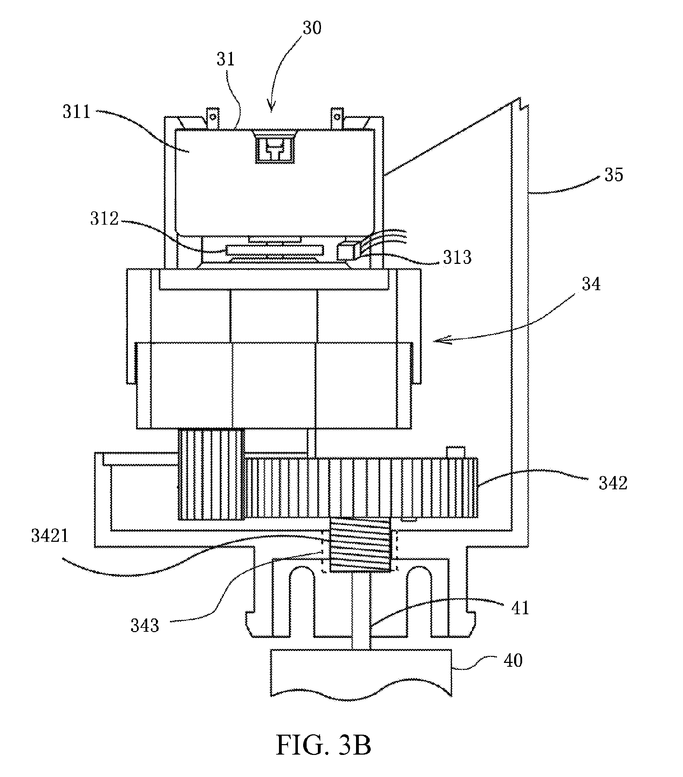

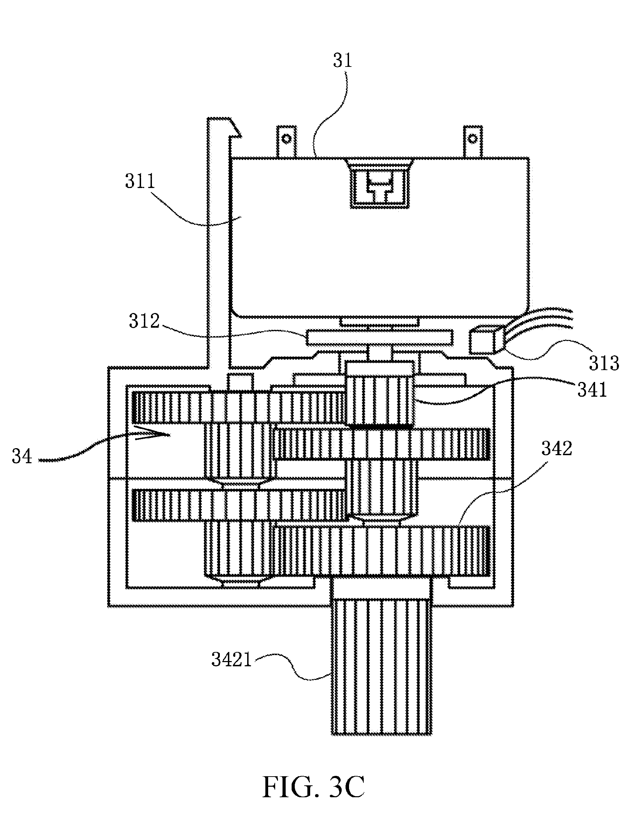

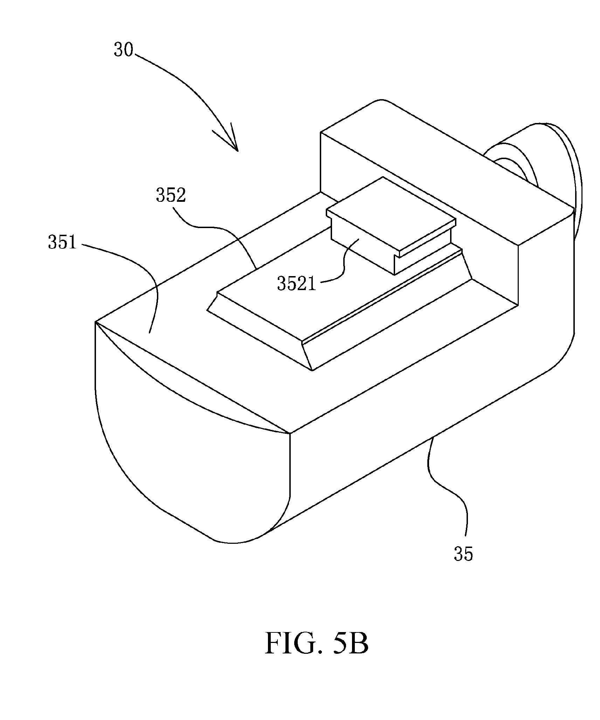

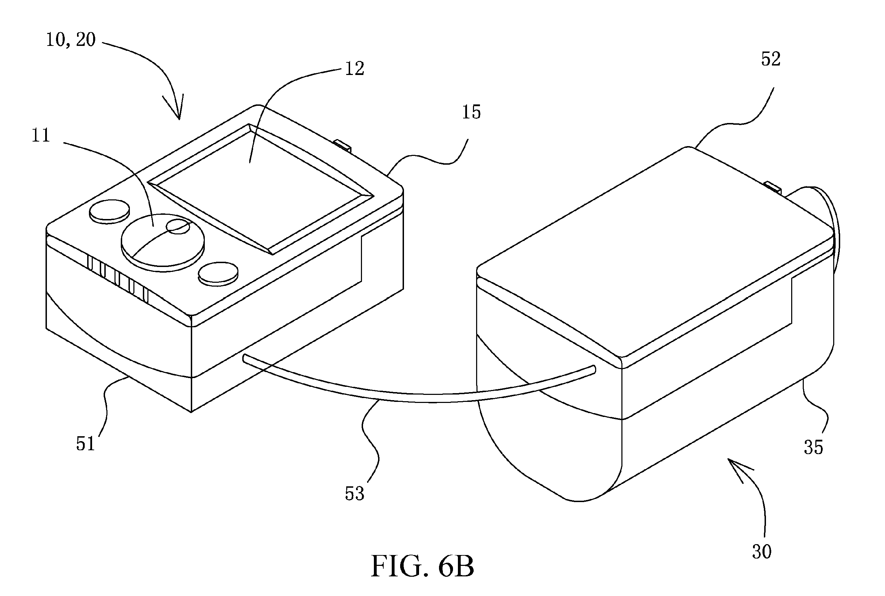

As shown in FIG. 3A to FIG. 3C, the heating valve drive unit 30 includes a DC motor 311, a PM 312, a Hall sensor 313, a gearbox 34 and a second casing 35, in which the PM 312 is circular and plate-like, and is installed on an output shaft of the DC motor 311, the Hall sensor 313 is installed outside the PM 312 and is disposed below an installation position of the DC motor in the second casing 35. When the DC motor 311 rotates, the PM 312 installed on the output shaft thereof rotates accordingly, and relative to the Hall sensor 313 fixed near the PM, each rotation of the PM brings an N-S pole shift once, and the Hall sensor correspondingly outputs a signal, so that the rotational speed and the number of rotations of the motor are measured. The gearbox 34 consists of multiple sets of gears engaged with each other, and in the embodiment as shown in FIG. 3C, the gearbox 34 consists of three sets of gears, in which, an input end gear 341 is connected to the output shaft of the motor 311, and an output end gear 342 may be axially moved. Specifically, an output side of the output end gear 342 is disposed with a screw rod 3421, the screw rod is engaged with an inner nut 343 disposed on an end cover of the gear set, and a tip of a free end of the screw rod 3421 is connected to the switch lever 41 of the heating valve 40. The DC motor 311, the PM 312, the Hall sensor 313, and the gearbox 34 are disposed inside the second casing 35. As shown in FIG. 3B and FIG. 3C, when the DC motor 311 rotates clockwise or counterclockwise, the DC motor 311 drives the screw rod 3421 connected to the switch lever 41 to move forward or backward through the gearbox 34, so as to control the opening or closing degree of the heating valve 40. A plugging structure corresponding to the first casing is disposed on the second casing 35, and as shown in FIG. 5B and FIG. 6A, a second L-shaped step surface 351 butted with the L-shaped step surface of the temperature control unit is disposed on a side of the second casing 35 of the heating valve drive unit 30, a positioning block 352 is disposed on the center of the second L-shaped step surface, and a positioning protrusion 3521 corresponding to the positioning notch on the temperature control unit is disposed on the positioning block 352. FIG. 4 illustrates an embodiment of an integrated heating valve temperature control device with the motor drive unit 20, the temperature control unit 10 and the heating valve drive unit 30 integrally plugged, in which, the first casing 15 of the temperature control unit 10 and the second casing 35 of the heating valve drive unit 30 are integrally engaged and plugged through the L-shaped step surface 151 of the first casing and the L-shaped step surface 351 of the second casing. FIG. 5A illustrates an embodiment of a motor drive unit disposed with the wireless receiving circuit, which has an L-shaped step surface of the third casing 24 same as the L-shaped step surface of the first casing 15 of the temperature control unit, and is disposed with the motor drive unit 20 and the wireless receiving circuit (not shown) therein, and the wireless receiving circuit is a common wireless receiving circuit. The third casing 24 is plugged to the second casing 35 of the heating valve control unit (the plugging manner is the same as above) to form a heating valve control unit integrated into the motor drive unit and wirelessly connected to the temperature control unit with the wireless transmitting circuit as shown in FIG. 5D. FIG. 6A illustrates an embodiment of connecting the temperature control unit and the motor drive unit to the heating valve control unit in a wired manner, in which, the temperature control unit 10 and the motor drive unit 20 are connected to the first junction box 51, the first junction box is the same as the second casing 35 of the heating valve drive unit 30 in shape, and is plugged to the first casing 15 of the temperature control unit to form an integrated temperature control unit 10 and motor drive unit 20 as shown in FIG. 6B, which is capable of being placed in the indoor place far away from the radiator. The heating valve control unit 30 is connected to the second junction box 52, and the second junction box is the same as the first casing 15 of the temperature control unit 10 in shape, and is plugged to the second casing 35 of the heating valve control unit to form an integrated heating valve control unit as shown in FIG. 6B, which is connected to the heating valve. The first junction box 51 is connected to the second junction box 52 through a lead 53.

The second junction box 52 is plugged to the second casing 35 of the heating valve control unit to form the integrated heating valve control unit as shown in FIG. 6B, which is connected to the heating valve. The first junction box 51 is connected to the second junction box 52 through the lead 53. More specifically, as shown in FIG. 7A and FIG. 7B, the L-shaped step surface of the additional battery box 60 or the power adapter connection box 60 of the external power supply is the same as the L-shaped step surface of the second casing 35 of the heating valve drive unit 30, which therefore can be plugged to the first casing 15 of the temperature control unit 10 (as shown in FIG. 7A) or the motor drive unit 20 disposed with the wireless receiving device (as shown in FIG. 7B). The additional battery box can prolong the service life of the batteries, and the power adapter connection box of the external power supply can be connected to and use the external power supply.

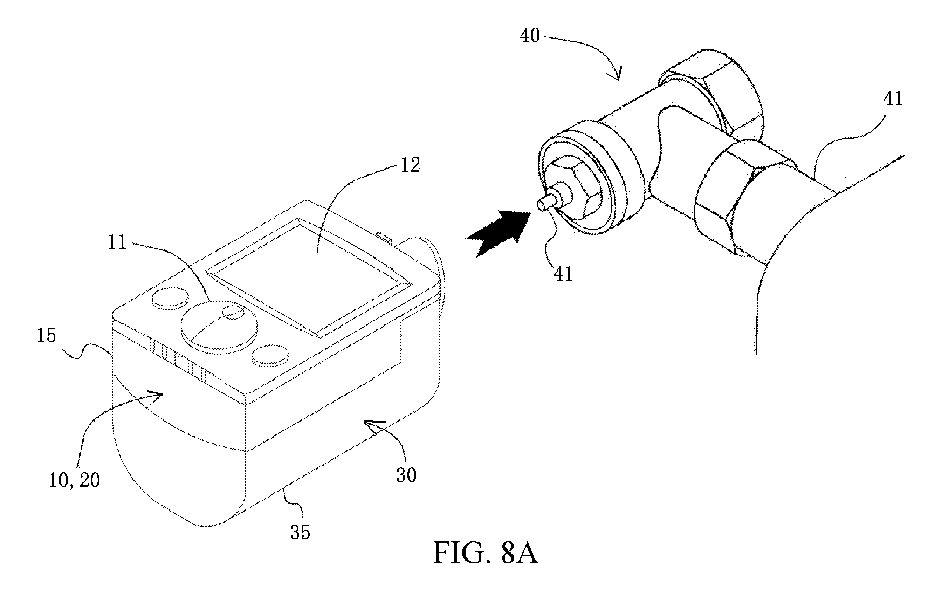

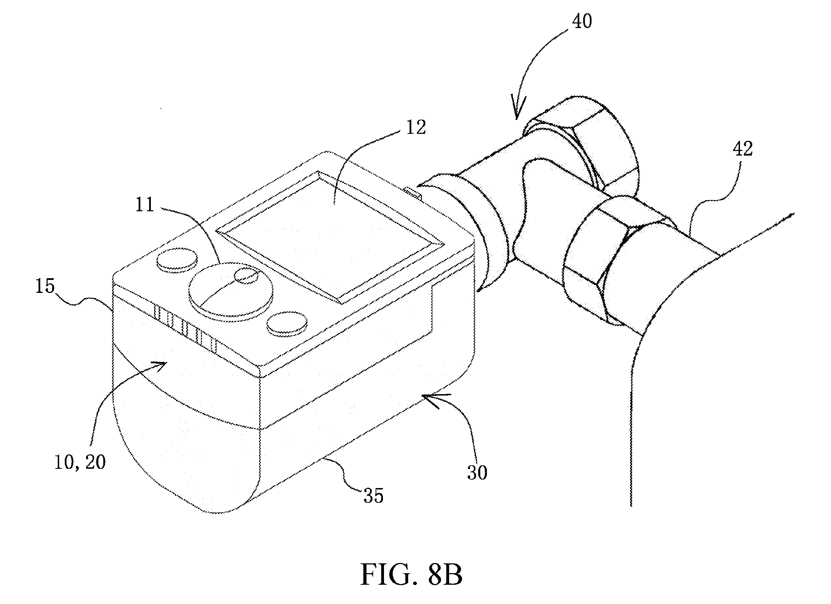

FIG. 8A and FIG. 8B illustrate a use state of the present invention, and in FIG. 8A, the integrated temperature control unit 10, motor drive unit 20 and heating valve control unit 30 are connected to the switch lever 41 of the heating valve 40 through the gearbox 34 of the heating valve drive unit 30 to form a connection state as shown in FIG. 8B.

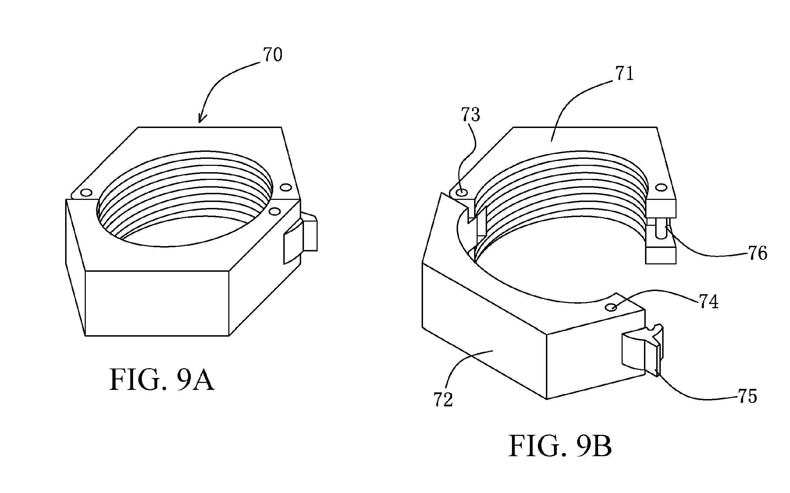

In an emergence that the user has no batteries for replacement and tools for removing the control device when the batteries are exhausted and the valve is closed, in order to prevent the heater from stopping heat supply, in the present invention, a manually controlled fixing nut is further disposed to fixedly connect the heating valve drive unit to the heating valve. The user may pull a hook in the emergence to separate the heating valve drive unit from the heating valve, so as to restore the heat supply. As shown in FIG. 9A and FIG. 9B, the manually controlled fixing nut 70 includes two half nuts 71, 72, two turning shafts 73, 74, one manual hook 75, and one rod 76. One end of the half screw 71 and one end of the half screw 72 are connected through the turning shaft 73, and the two half screws 71, 72 are capable of rotating about the turning shaft 73 to close or open. The other end of the half screw 72 is installed with the turning shaft 74 and the manual hook 75, and the manual hook 75 is capable of rotating about the turning shaft 74. The rod 76 is installed on the other end of the half screw 71. After the manual hook 75 hooks the rod 76, the fixing nut 70 is closed and fixedly connects the heating valve drive unit 30 to the heating valve 40. When the manual hook 75 is pulled out of the rod 76, the fixing nut 70 is opened, and the heating valve drive unit 30 fixed by the fixing nut is separated from the hating valve 40, so that the heating valve 40 can be opened to supply heat.

The present invention has been disclosed through the above embodiments, but the scope of the present invention is not limited thereto. The components of the present invention can be replaced with like or equivalent elements known by persons skilled in the art without departing from the idea of the present invention.

## Claims

1. A heating valve temperature control device, comprising: a temperature control unit (10), a motor drive unit (20), and a heating valve drive unit (30), wherein the device further comprises a manually controlled fixing nut (70), the fixing nut is connected to a heating valve (40) of the heating valve drive unit (30); the heating valve drive unit (30) comprises a direct circuit (DC) motor (31) capable of controlling the rotational speed or the number of rotations, a gearbox (34), and a second casing (35), the DC motor (31) capable of controlling the rotational speed or the number of rotations comprises a DC motor (311), a permanent magnet (PM) (312), and a Hall sensor (313), the PM is installed on an output shaft of the DC motor (311), and the Hall sensor (313) is installed outside the PM (312); the heating valve drive unit (30) is connected to the motor drive unit (20) and the heating valve (40), the motor drive unit (20) is connected to the temperature control unit (10) in a wired or wireless manner, and is connected to the DC motor (31); and the temperature control unit (10), the motor drive unit (20) and the heating valve drive unit (30) are separately or integrally disposed.

2. The heating valve temperature control device according to claim 1, wherein temperature control unit (10) comprises a setting knob or button (11) for setting an indoor temperature, a liquid crystal display (LCD) (12), a control chip (13), a temperature sensor (14) for detecting the indoor temperature, batteries and a first casing (15), the setting knob or button (11), the LCD (12), the temperature sensor (14) and the batteries are all connected to the control chip (13), and the setting knob or button (11) and the LCD (12) are disposed on the first casing (15).

3. The heating valve temperature control device according to claim 1, wherein the motor drive unit (20) comprises a cut-off circuit (21) composed by triodes Q5, Q9 and Q10 and resistors R19-R23, and a conduction circuit (22) composed by triodes Q6-Q8 and resistors R25-R28, an input end of the cut-off circuit (21) is connected to the temperature control unit (10) through the triode Q9 and the resistor R19, an output end thereof is connected to the DC motor (31) through the triode Q10, the resistor R16 and a capacitor C12; and an input end of the conduction circuit (22) is connected to the temperature control unit (10) through the triode Q7, and an output end thereof is connected to the DC motor (31) through the triode Q8, the resistor R16 and the capacitor C12.

4. The heating valve temperature control device according to claim 1, wherein the gearbox (34) comprises multiple sets of gears engaged with each other, an input end gear (341) is connected to the output shaft of the DC motor (311), an output end gear (342) is capable of axially moving, an output side of the output end gear (342) is disposed with a screw rod (3421), the screw rod is engaged with an inner nut (343) disposed on an end cover of the gear set, and the screw rod (3421) is connected to a switch lever (41) of the heating valve (40), the DC motor (311), the PM (312), the Hall sensor (313) and the gearbox (34) are disposed inside the second casing (35).

5. The heating valve temperature control device according to claim 3, wherein the motor drive unit (20) is disposed inside the first casing (15) of the temperature control unit (10) to form an integrated structure, the cut-off circuit (21) and the conduction circuit (22) thereof are respectively connected to the temperature control unit (10) and the DC motor (311), and the temperature control unit (10), the motor drive unit (20) and the heating valve drive unit (30) are integrally connected by plugging or connected in a split manner through a lead.

6. The heating valve temperature control device according to claim 2, wherein the motor drive unit (20) wirelessly connected to the temperature control unit (10) is disposed inside a third casing (24) having the same shape as the first casing (15) of the temperature control unit, a wireless transmitting circuit is disposed inside the temperature control unit (10) and is connected to the control chip (13); a wireless receiving circuit is disposed inside the motor drive unit (20B) and is connected to a cut-off circuit (21) and a conduction circuit (22) of the motor drive unit.

7. The heating valve temperature control device according to claim 5, wherein one end of the first casing (15) of the temperature control unit (10) or a third casing (24) of the wirelessly connected motor drive unit is disposed with a first L-shaped step surface (151), and a positioning notch is disposed on a center of the first L-shaped step surface; a second L-shaped step surface (351) butted with the L-shaped step surface of the temperature control unit is disposed on a side of the second casing (35) of the heating valve drive unit (30), a positioning block (352) is disposed on the center of the second L-shaped step surface, and a positioning protrusion (3521) corresponding to the positioning notch on the temperature control unit is disposed on the positioning block (352); the first casing (15) of the temperature control unit (10) and the second casing (35) of the heating valve drive unit (30) are integrally engaged and plugged through the first L-shaped step surface (151) and the second L-shaped step surface (351).

8. The heating valve temperature control device according to claim 7, wherein the temperature control unit (10) and the motor drive unit (20) are connected to a first junction box (51), the first junction box is the same as the second casing (35) of the heating valve drive unit (30) in shape, the heating valve drive unit (30) is connected to a second junction box (52), the second junction box is the same as the first casing (15) of the temperature control unit (10) in shape, and the first junction box (51) is connected to the second junction box (52) through a lead (53).

9. The heating valve temperature control device according to any one of claims 1 to 8, wherein the device is selectively disposed with one or more additional battery boxes or a power adapter connection box (60) of an external power supply, the additional battery box or the power adapter connection box connected to the external power supply is connected to the integrated temperature control unit (10), motor drive unit (20) and heating valve drive unit (30) respectively, or is connected to the temperature control unit (10) disposed with the wireless transmitting circuit, the motor drive unit disposed with a wireless receiving circuit (23), and the heating valve drive unit (30) respectively.

10. The heating valve temperature control device according to claim 1, wherein the manually controlled fixing nut (70) comprises two half nuts (71, 72), two turning shafts (73, 74), one manual hook (75), and one rod (76), one end of the half nut (71) is connected to one end of the half nut (72) through the turning shaft (73), the two half nuts (71, 72) are capable of rotating about the turning shaft (73), the other end of the half nut (72) is installed with the turning shaft (74) and the manual hook (75), the manual hook (75) is capable of rotating about the turning shaft (74), the other end of the half nut (71) is installed with the rod (76), the manual hook (75) hooks the rod (76), and the fixing nut (70) fixedly connects the heating valve drive unit (30) to the heating valve (40).
